# EUROPEAN PATENT APPLICATION

(11) **EP 4 528 585 A1**
(43) Date of publication of application: **26.03.2025**
(21) Application number: 23315362.6
(22) Date of filing: 21.09.2023
(51) Int. Cl.: G06K 19/07, G06K 19/077

(54) **METHOD FOR MANUFACTURING A SMART CARD COMPRISING USER INTERFACE SENSORS**

(71) Applicant: THALES DIS FRANCE SAS, 92190 Meudon (FR)
(72) Inventor: Paladjian, Pierre, 13190 ALLAUCH (FR)
(74) Representative: Grevin, Emmanuel

(57) **Abstract**

The invention is a method for manufacturing a smart card (10) including a card body (11) in which the body is provided with an antenna (30), first and second user interface sensors (24, 25) and a secure entity including a processing unit (21) having a wireless communication module (22) connected to the antenna and a sensor controller (23). The method comprises the steps of:
providing the card body with a first connecting unit (26) connecting the sensor controller (23) to said first user interface sensor (24) and providing the body (11) with a second connecting unit (27) connecting the sensor controller (23) to said second user interface sensor (25) ; and
providing the card body with an intermediate inlay (40) carrying an electrical circuit formed by a conductive wire integrated on the inlay. Said first and second user interface sensors are capacitive buttons and said electrical circuit constitutes both said first and second user interface sensors, said first and second connecting unit and the antenna.

## Description

### (Field of the invention)

The present invention relates to methods for manufacturing smart cards comprising user interface sensors. It relates particularly to methods for building a smart card able to perform contactless transactions.

### (Background of the invention)

Contactless payment cards allow users to pay in contactless mode during a transaction with payment terminal. During a contactless payment transaction, the cardholder (i.e. card user) cannot select a specific payment application (e.g. debit, credit, or VISA^{®}, Mastercard^{®}, or a domestic scheme) into the card. Consequently, the contactless payment transaction is performed using the payment application which has been set as default payment application in the card.

The document EP2933711B1 describes a method for manufacturing a user interface unit for a smart card.

### (Summary of the Invention)

However, the card user may want to select a payment application different from the default one depending on some parameters like the transaction amount, a transaction reward, merchant opportunities, the wish to use credit, or the wish to use a domestic or international payment scheme.

There is a need to manufacture a card allowing the card user to select a payment application different from the default one for a contactless transaction.

The invention aims at solving the above-mentioned technical problem.

An object of the present invention is a smart card comprising a card body embedding an antenna, first and second user interface sensors and a secure entity including a processing unit having a wireless communication module connected to the antenna. The secure entity includes a sensor controller connected to the first user interface sensor by a first connecting unit and to the second user interface sensor by a second connecting unit. The card body comprises an intermediate inlay carrying an electrical circuit formed by a conductive wire disposed on the inlay. The first and second user interface sensors are capacitive buttons and the electrical circuit constitutes both the first and second user interface sensors, the first and second connecting units and the antenna.

Advantageously, during a transaction operated with a coupled reader , the processing unit may be configured to retrieve from the sensor controller an activation status of said first and second user interface sensors, to activate a first feature only if the first user interface sensor has been activated by a user, and to activate a second feature only if the second user interface sensor has been activated by the user; said first and second features being different.

Advantageously, the smart card may be a payment card, the first feature may be a credit payment and the second feature may be a debit payment.

Advantageously, the antenna may comprise two or more loops of said electrical circuit and both said first and second user interface sensors may be located inside said two or more loops.

Advantageously, the card body may comprise an external layer placed above the inlay, said external layer being opaque and hiding both said first and second user interface sensors.

Advantageously, the card body may have two opposite sides, and said first user interface sensor may be configured to be activable by a user only through one of the sides and said second user interface sensor may be configured to be activable by the user only through the other side.

Advantageously, the processing unit may be a secure chip and the sensor controller may be a microcontroller unit connected to the processing unit.

Advantageously, the processing unit and the sensor controller may be merged in a single hardware secure chip.

Another object of the present invention is a method for manufacturing a smart card including a card body. The method comprises the step of providing the card body with an antenna, first and second user interface sensors and a secure entity including a processing unit having a wireless communication module connected to the antenna. The secure entity includes a sensor controller and the method comprises a steps:
providing the card body with a first connecting unit connecting the sensor controller to said first user interface sensor and providing the card body with a second connecting unit connecting the sensor controller to said second user interface sensor; and
providing the card body with an intermediate inlay carrying an electrical circuit formed by a conductive wire integrated on the inlay. Said first and second user interface sensors are capacitive buttons and said electrical circuit constitutes both said first and second user interface sensors, said first and second connecting unit and the antenna.

Advantageously, the electrical circuit may be created on the intermediate inlay as a continuous wire.

Advantageously, during a transaction operated with a coupled reader, the processing unit may retrieve, from the sensor controller, an activation status of said first and second user interface sensors, activate a first feature only if the first user interface sensor has been activated by a user, and activate a second feature only if the second user interface sensor has been activated by the user; said first and second features being different.

Advantageously, the antenna may comprise two or more loops of the electrical circuit and both said first and second user interface sensors may be located inside said two or more loops.

Advantageously, the card body may have two opposite sides, and said first user interface sensors may be activable by a user only through one of the sides and said second user interface sensors may be activable by the user only through the other side.

### (Brief description of the drawings)

Other characteristics and advantages of the present invention will emerge more clearly from a reading of the following description of a number of preferred embodiments of the invention with reference to the corresponding accompanying drawings in which:
- Fig. 1 shows a diagram of an inlay according to an example of the invention;
- Fig. 2 shows a diagram of architecture of a smart card according to an example of the invention;
- Fig. 3 shows a sectional view related to the example of Figure 2;
- Fig. 4 shows an exemplary flow diagram for the manufacturing of a smart card according to an example of the invention; and
- Fig. 5 shows an example of usage of a smart card according to an example of the invention.

### (Detailed description of the preferred embodiments)

The invention may apply to any type of contactless smart cards intended to embed two or more applications able to participate to a monetary transaction.

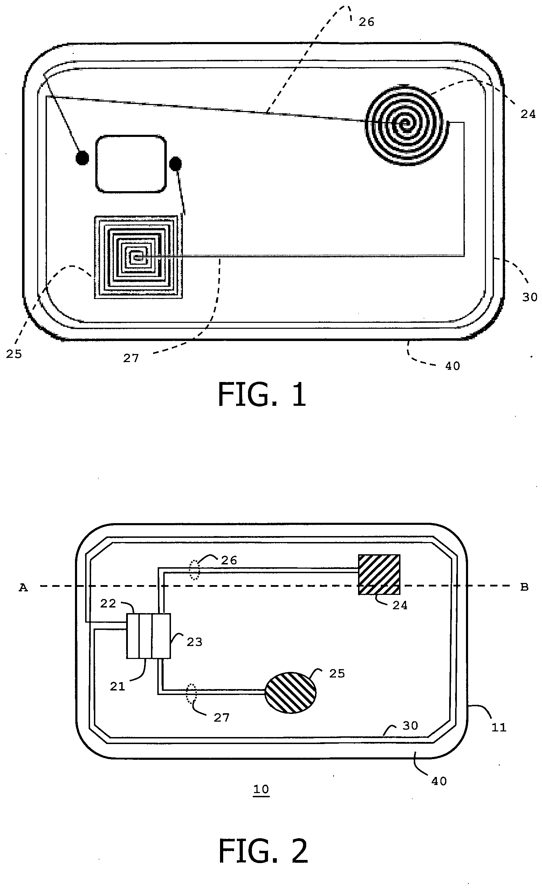

Figure 1 depicts a diagram of an inlay according to an example of the invention.

The inlay 40 is intended to be integrated into the body of a smart card.

The inlay carries an electrical circuit formed by a conductive wire disposed on the inlay.

The electrical circuit constitutes both a first interface sensor 24, a second user interface sensor 25, a first connecting unit 26, second connecting unit 27 and an antenna 30.

The first connecting unit 26 comprises a first connecting area for connecting a sensor controller that can be placed on the inlay. The first connecting unit 26 is designed to connect the first user interface sensor 24 to the sensor controller through the first connecting area.

The second connecting unit 27 comprises a second connecting area for connecting the sensor controller. The second connecting unit 27 is designed to connect the second user interface sensor 25 to the sensor controller through the second connecting area.

The electrical circuit constitutes a third connecting area configured to connect the antenna to a wireless communication module that can be placed on the inlay.

The first and second user interface sensors are capacitive buttons that can be activated by the cardholder.

When electrical circuit passes over itself, an insulating layer can be placed between the two portions of wire so that they do not touch each other. Alternatively, the wire can have an insulating sheath allowing the overlapping of two portions of wire without short circuit.

Each of the interface sensors can have its own shape such as a square, a rectangle, a diamond, an oval or a circle.

The electrical circuit can comprise more than two interface sensors.

In some embodiments, the conductive wire can be a metal wire deposited or printed on top of the inlay.

In some embodiments, the conductive wire can be a metal wire embedded in the upper part of the inlay.

In some embodiments, the antenna comprises two or more loops of the electrical circuit and both the first and second user interface sensors are located inside the two or more loops of the antenna.

In some embodiments, the conductive wire can be placed on the two opposite surfaces of the inlay connected by a hole designed for the passage of the wire.

In the example of Figure 1, the electrical circuit is made of a single continuous wire forming the above-presented items.

Figure 2 depicts a diagram of architecture of a smart card according to an example of the invention.

In this example, smart card 10 has a body 11 comprising an inlay 40 which can be of the type of the one of Figure 1. The inlay 40 is an intermediate inlay covered by an overlay (not shown).

The inlay 40 carries an electrical circuit formed by a conductive wire disposed on the inlay. The electrical circuit constitutes both first and second user interface sensors, 24 & 25, first and second connecting units, 26 & 27 and the antenna.

The card body 11 comprises a secure entity that includes a processing unit 21, a wireless communication module 22 and a sensor controller 23. The wireless communication module 22 is connected to the antenna 30.

The first connecting unit 26 connects the first user interface sensor 24 to the sensor controller 23. In the same way, the second connecting unit 27 connects the second user interface sensor 25 to the sensor controller 23.

Each of the connecting units may comprise one or more sections of wire. In the example of Figure 2, the first connecting unit 26 comprise two parallel sections of wire connecting the first user interface sensor 24 to a sensor controller 23.

The processing unit 21 can be a secure chip (also name secure element or smart card chip).

The sensor controller 23 is designed to detect change in capacitance to manage the user interface sensors as capacitive buttons.

In some embodiments, the sensor' controller 23 can be a microcontroller unit (like a MCU) connected to the processing unit 21.

In some embodiments, the processing unit 21 can be configured to act as the sensor controller 23.

In some embodiments, the processing unit 21, the wireless communication module 22 and the sensor controller 23 can be merged in a single hardware component.

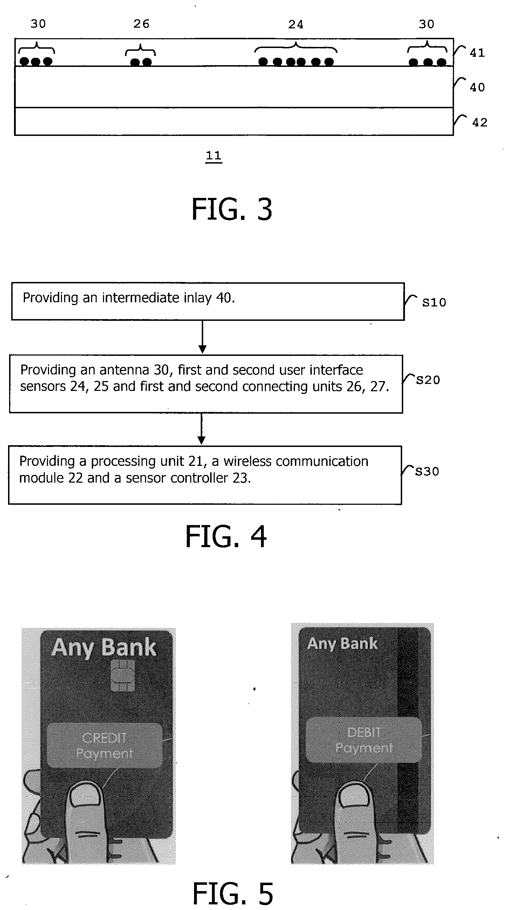

Figure 3 depicts a sectional view of the card of Figure 2 along the A-B line.

The card body 11 comprises the intermediate inlay 40 whose main faces are covered by an upper layer 41 and a lower layer 42. The upper and lower layers can be conventional translucent overlays aiming at protecting the intermediate inlay 40.

The top of the inlay 40 carries an electrical circuit that forms both the antenna 30 (two portions located near each edge of the body), the first user interface sensor 24 and the first connecting unit 26. In this example, the conductive wire is placed on the inlay 40 and covered by the overlay 41. Alternatively, the conductive wire can be embedded in the inlay 40 itself.

In some embodiments, the overlay (i.e. external layer) 41 can be opaque and hide both said first and second user interface sensors. Since the physical user interface sensors can be masked, an indication of their position can be printed on the surface of the card body so as to guide the user when they wish to select one of the applications via one of these areas.

Preferably, the electrical circuit is a continuous wire placed on (or into) the intermediate inlay 40.

In some embodiments, each of the user interface sensors is uniquely associated with its own application embedded in the secure entity of the smart card. The processing unit 21 can be configured to retrieve from the sensor controller 23 an activation status of the first and second user interface sensors during a transaction operated with a reader coupled to the card. Then the processing unit 21 can be configured to activate a first feature only if the first user interface sensor 24 has been activated by the cardholder, and to activate a second feature only if the second user interface sensor 25 has been activated by the user. Said first and second features are different.

For instance, the smart card can be a payment card, the first feature can be a credit payment application and the second feature can be a debit payment application.

In another example, the first feature can be the payment application of a national payment scheme and the second feature can be the payment application of an international payment scheme.

The card body 11 has two opposite sides, generally called upper and lower sides.

In some embodiments, each of the user interface sensors could be activated regardless of the side on which the user places a finger because the presence detection made by such a capacitive button passes through the thickness of the card body.

In some embodiments, the first user interface sensor 24 is configured to be activable by the user only via one of the sides and the second user interface sensor 25 is configured to be activable by the user only via the other side. A physical barrier can be inserted in the card body 11 by addition of a special insulating material in the body 11. The insulating material can be placed in the intermediate inlay 40 (or in a layer on the opposite side) opposite the user interface sensor to be insulated.

In some embodiment, the insulating material can be a pre-cut part which is inserted into the card body 11.

In some embodiment, the insulating material can be created by depositing or printing material onto a surface of one of the elements constituting the card body.

The insulating material can be a copper strip for instance.

The insulating material reduces the risk of the user triggering a user interface sensor that is supposed to be activated from the side which is not visible.

Figure 4 depicts an exemplary flow diagram for the manufacturing of a smart card according to an example of the invention.

At step S10, the card body 11 is provided with an intermediate inlay 40.

At step S20, the inlay 40 is provided with an antenna 30, first and second connecting units 26 & 27, and first and second user interface sensors, 24 & 25, all in the form of an electrical circuit. Preferably, the electrical circuit is made of a continuous wire that is placed on (or into) the intermediate inlay 40.

Steps S10 and S20 can be performed in any order.

At step S30, the card body 11 is provided with a processing unit 21, a wireless communication module 22 and a sensor controller 23. The wireless communication module 22 is connected to the antenna 30, the first connecting unit 26 connects the sensor controller 23 to the first user interface sensor 24 and the second connecting unit 27 connects the sensor controller 23 to the second user interface sensor 25.

The electrical circuit is formed by a conductive wire integrated on (or into) the inlay 40 and said first and second user interface sensors are capacitive buttons.

Figure 5 depicts an example of usage of a smart card according to an example of the invention.

Once the card has been issued, the user (i.e., bank's customer) can used it for performing a monetary transaction like a payment or a cash withdrawal.

In the example of Figure 5, the manufactured payment card has a first user interface sensor dedicated to a credit payment and activable by the user only through a first side of the card body. The card has a second user interface sensor dedicated to a debit payment and activable by the user only on the other side.

In front of a conventional Point-Of-Sale (POS) terminal, the user can select the credit payment application embedded in the card chip by placing a finger on the first user interface sensor that is used a dedicated activation button (left part of Figure 5). Conversely, the user can select the debit payment application embedded in the card chip by placing a finger on the second user interface sensor (right part of Figure 5) .

An advantage of some embodiments of the invention is to reduce time required to manufacture a smart card and manufacturing costs by creating only one electrical circuit on the intermediate inlay for forming many components.

Thanks to some embodiments of the invention, smart cards can be built on existing production machines/production lines whose firmware/software just need to be slightly updated. For example, a conventional wire embedding machine can be used to build the electrical circuit of the intermediate inlay.

Thanks to some embodiments of the invention, the capacitive buttons (user interface sensors) can be designed in a wide variety of geometric shapes (and positions on the card body) and thus, adapted to issuer bank wishes.

The invention is not limited to the described embodiments or examples. In particular, the described examples and embodiments may be combined, and the card can embed more than two user interface sensors.

The invention is not limited to payment smart card and can apply to any type of contactless cards.

Some embodiments of the invention can be used to select an application for a contact transaction (i.e., card inserted in the reader of the coupled terminal).

In some embodiment, the electrical circuit can connect the secure entity to a biometric sensor like a fingerprint scanner embedded in the card body.

In some embodiments, a display component (like a LED) can be embedded in the card body and configured to give a visual confirmation of the type of application selected by the user via the capacitive buttons.

Some embodiments of the invention allow card users to pay in contactless mode with a bank card by selecting one of several embedded payment applications depending on how the user holds the card in their hand.

## Claims

1. A smart card (10) comprising a card body (11) embedding an antenna (30), first and second user interface sensors (24, 25) and a secure entity including a processing unit (21) having a wireless communication module (22) connected to the antenna,
wherein the secure entity includes a sensor controller (23) connected to said first user interface sensor (24) by a first connecting unit (26) and to said second user interface sensor (25) by a second connecting unit (27),
wherein the card body (11) comprises an intermediate inlay (40) carrying an electrical circuit formed by a conductive wire disposed on the inlay, and
wherein said first and second user interface sensors (24, 25) are capacitive buttons and said electrical circuit constitutes both said first and second user interface sensors (24, 25), said first and second connecting units (26, 27) and the antenna (30).

2. The smart card according to claim 1, wherein, during a transaction operated with a coupled reader , the processing unit (21) is configured to retrieve from the sensor controller (23) an activation status of said first and second user interface sensors (24, 25), to activate a first feature only if the first user interface sensor (24) has been activated by a user, and to activate a second feature only if the second user interface sensor (25) has been activated by the user; said first and second features being different.

3. The smart card according to claim 2, wherein the smart card is a payment card, the first feature is a credit payment and the second feature is a debit payment.

4. The smart card according to claim 1, wherein the antenna comprises two or more loops of said electrical circuit (50) and wherein both said first and second user interface sensors (24, 25) are located inside said two or more loops.

5. The smart card according to claim 1, wherein the card body comprises an external layer (41) placed above the inlay, said external layer being opaque and hiding both said first and second user interface sensors (24, 25) .

6. The smart card according to claim 1, wherein the card body has two opposite sides, and wherein said first user interface sensor (24) is configured to be activable by a user only through one of the sides and said second user interface sensor (25) is configured to be activable by the user only through the other side.

7. The smart card according to claim 1, wherein the processing unit (21) is a secure chip, and the sensor controller (23) is microcontroller unit connected to the processing unit (21).

8. The smart card according to claim 1, wherein the processing unit (21) and the sensor controller (23) are merged in a single hardware secure chip.

9. A method for manufacturing a smart card (10) including a card body (11), the method comprising providing the card body (11) with an antenna (30), first and second user interface sensors (24, 25) and a secure entity including a processing unit (21) having a wireless communication module (22) connected to the antenna,
wherein the secure entity includes a sensor controller (23), and
wherein the method comprises:
providing the card body (11) with a first connecting unit (26) connecting the sensor controller (23) to said first user interface sensor (24) and providing the card body (11) with a second connecting unit (27) connecting the sensor controller (23) to said second user interface sensor (25);
providing the card body (11) with an intermediate inlay (40) carrying an electrical circuit formed by a conductive wire integrated on the inlay; and
wherein said first and second user interface sensors (24, 25) are capacitive buttons and said electrical circuit constitutes both said first and second user interface sensors (24, 25), said first and second connecting unit (26, 27) and the antenna (30).

10. The method according to claim 9, wherein the electrical circuit is created on the intermediate inlay (40) as a continuous wire.

11. The method according to claim 9, wherein, during a transaction operated with a coupled reader , the processing unit (21) retrieves from the sensor controller (23) an activation status of said first and second user interface sensors (24, 25), activates a first feature only if the first user interface sensor (24) has been activated by a user, and activates a second feature only if the second user interface sensor (25) has been activated by the user; said first and second features being different.

12. The method according to claim 9, wherein the antenna comprises two or more loops of said electrical circuit (50) and wherein both said first and second user interface sensors (24, 25) are located inside said two or more loops.

13. The method according to claim 9, wherein the card body has two opposite sides, and wherein said first user interface sensors (24) is activable by a user only through one of the sides and said second user interface sensors (25) is activable by the user only through the other side.
